# EUROPÄISCHE PATENTSCHRIFT

(11) **EP 0 530 539 B1**
(45) Veröffentlichungstag und Bekanntmachung des Hinweises auf die Patenterteilung: **05.02.1997**
(21) Anmeldenummer: 92113528.1
(22) Anmeldetag: 08.08.1992
(51) Int. Cl.: B32B 27/08, B32B 27/34, B65D 65/40

(54) **Coextrudierte biaxial gereckte Schlauchfolie**
Coextruded biaxially oriented tubular foil
Film tubulaire coextrudé orienté biaxialement

(30) Priorität: 23.08.1991 DE 4128082; 13.09.1991 DE 4130485
(43) Veröffentlichungstag der Anmeldung: 10.03.1993
(73) Patentinhaber: Wolff Walsrode Aktiengesellschaft, D-29655 Walsrode (DE)
(72) Erfinder: Hennig-Cardinal von Widdern, Michael, Dipl.-Ing., W-3030 Walsrode (DE); Weber, Gunter, Dr., W-3032 Fallingbostel (DE)
(74) Vertreter: Braun, Rolf, Dr.

(56) Entgegenhaltungen:
- EP-A- 0 183 512
- DE-A- 2 527 166
- DE-A- 2 724 253
- DE-A- 4 001 612
- Derwent Publications Ltd., London, GB;
- Derwent Publications Ltd., London, GB;
- Derwent Publications Ltd., London, GB; AN 79-30407B

## Beschreibung

Die Erfindung betrifft eine coextrudierte biaxial gereckte Schlauchfolie zur dauerhaften und faltenfreien Umhüllung von in flüssigem oder pastösem Zustand abgepackten Füllgütern, insbesondere Lebensmitteln wie Brüh-, Kochwurst und Schmelzkäse.

Umhüllungen für Lebensmittel, wie z.B. Koch- oder Brühwurst oder mittels gleichem oder ähnlichem Verfahren abgepackte Füllgüter, müssen ein umfangreiches Anforderungsprofil erfüllen, um der Anwendung in der Praxis gerecht zu werden.

Es sind dies die Forderungen:
a) **Rückstellvermögen**
   Sowohl mit der Abkühlung des zuvor erhitzten Füllgutes als auch mit dem Gewichtsverlust durch Abdampfen von Wasser während der Lagerung geht eine Volumenverringerung der abgepackten Ware einher. Unabhängig von der Volumenverringerung muß die Folie faltenfrei um den Verpackungsinhalt anliegen, um der Ware ein verkaufsförderndes Aussehen zu verleihen.
b) **Festigkeit**
   Das Füllgut wird mit hoher Geschwindigkeit bei einem Fülldruck von bis zu 1,6 bar in die Schlauchfolie gepreßt. Das Folienmaterial soll nach der Druckbeaufschlagung weder partielle Aufweitungen (Beulen) noch eine wesentliche Aufweitung des Kalibers (Durchmesser) aufweisen. Durch die Folienqualität muß gewährleistet sein, daß der hohe Fülldruck vornehmlich zu einer elastischen Verformung der Schlauchfolie führt.
c) **Temperaturbeständigkeit**
   Die Hülle muß einer Temperatur-/Spannungsbelastung derart standhalten, daß sie die Druckbeanspruchung durch das Füllgut auch während der Kochprozedur ohne übermäßige Verformung übersteht.
d) **Barriereeigenschaften**
   Für die unter anderem angestrebte Anwendung der Schlauchfolie als Umhüllung für Brüh- und Kochwurst sind gute Barriereeigenschaften hinsichtlich Sauerstoff- und Wasserdampfpermeation erforderlich.
   Die Sauerstoffbarriere verhindert eine frühzeitige Vergrauung des der Folieninnenseite zugekehrten Brätes.
   Die Wasserdampfbarriere behindert den durch Abdampfen von Wasser aus dem Füllgut induzierten Gewichtsverlust der Verkaufsware, der einerseits den Erlös des Produktes reduziert und andererseits infolge von Volumenverlust zu faltigen unansehnlichen Produkten führen kann.
e) **Bräthaftung**
   Speziell für die Anwendung als Brüh- und Kochwurstumhüllung soll die Schlauchfolie Bräthaftung aufweisen. Unter Bräthaftung versteht der Fachmann das Haftungsvermögen der Hülle am Füllgut. Die Affinität zwischen Umhüllung und Füllgut verhindert den Absatz von Gelee.
f) **Raffbarkeit**
   Vor der industriellen Verarbeitung mittels Füllautomaten wird die Schlauchfolie in die Form einer Raffraupe überführt. Dabei wird der Folienschlauch längs der Schlauchachse gefältelt und anschließend im Verhältnis 30:1 bis 60:1 komprimiert. Die Folie muß der extrem hohen Knickbeanspruchung ohne Beschädigung standhalten.
g) **Lebensmittelrecht**
   Das Produkt darf selbstverständlich nur Materialien enthalten, die nach den lebensmittelrechtlichen Gesetzen und Empfehlungen als unbedenklich eingestuft werden.
h) **Ökologie**
   Das Produkt sollte nur aus Materialien bestehen, die sowohl in ihrer Herstellung, Verarbeitung und Anwendung als auch in ihrer Entsorgung aus ökologischer Sicht unbedenklich sind.

Bisher sind keine biaxial gereckten Schlauchfolien aus thermoplastischen Kunststoffen bekannt, die dem umfangreichen Anforderungsprofil in allen Punkten genügen. Die stetig voranschreitende Ablösung von chlorhaltigen Verpackungsmitteln zwingt die Hersteller und Verarbeiter von Kunststoffdarmhüllen aus VDC/VC-Copolymerisaten alternative Verpackungslösungen anzubieten. Da die gereckte Folie aus VDC/VC-Copolymerisat die an sie gestellten Forderungen nach "Festigkeit", "Sauerstoff-", "Wasserdampfbarriere" und "Bräthaftung" mit nur einem Polymer erfüllen konnte, waren die Folienhersteller bereit, für das VDC/VC-Copolymerisat einen relativ hohen Rohstoffpreis zu zahlen. Die Weiterentwicklung der Coextrusionstechnik ermöglicht demgegenüber heute die Kombination von Polymereigenschaften im Coextrusionsverbund unter Einsatz von preisgünstigeren Polymeren.

Seitens der Schlauchfolienhersteller besteht das Interesse, ein den Qualitätsansprüchen der Anwender entsprechendes Produkt möglichst sicher und preiswert herzustellen, um einerseits die Abfallrate weitestgehend zu reduzieren und eine reproduzierbare Folienqualität liefern zu können und andererseits ein hochveredeltes Produkt preiswert anbieten zu können.

Das bekannte Herstellungsverfahren der biaxial gereckten Schlauchfolie gliedert sich in die Verfahrensschritte:
- Plastifizieren der thermoplastischen Polymere
- Überführen der Schmelze in die Schlauchform
- Rasche Abkühlung des schmnelzeflüssigen Primärschlauches in den Festkörperzustand, um die Bildung von Kristalliten weitestgehend zu unterdrücken
- Wiedererwärmen des Primärschlauches auf eine für die biaxiale Verstreckung geeignete Temperatur
- Biaxiales Verstrecken des wiedererwärmten Primärschlauches durch Anlegen einer Druckdifferenz zwischen Schlauchinnenvolumen und der Schlauchumgebung und durch die die Längsverstreckung unterstützende Längsabzugskraft
- Thermofixieren der biaxial gereckten Schlauchfolie
- Aufwickeln der Schlauchfolie
- Entsprechend den späteren Erfordernissen unterschiedliche Konfektionierungsschritte (z.B. Schneiden, Bedrucken, Raffen u.a.)

Unter der biaxialen Verstreckung versteht der Fachmann die Quer- und Längsverstreckung des thermoplastischen Extrudates bei Temperaturen zwischen Glasübergangstemperatur und Schmelztemperatur. Die biaxiale Reckung kann beispielsweise mittels einer mit einem Gas- oder Fluiddruckpolster gefüllten Blase erfolgen, die zwischen zwei mit unterschiedlich hohen Umfangsgeschwindigkeiten laufenden Walzenpaaren gas- bzw. fluiddicht eingeschlossen ist. Während das Verhältnis der unterschiedlichen Walzenumfangsgeschwindigkeiten dem Längsreckgrad entspricht, errechnet sich der Querreckgrad aus dem Verhältnis des Schlauchdurchmessers im gereckten Zustand zu dem im ungereckten Zustand. Der Flächenreckgrad resultiert aus dem Produkt des Längsreckgrades multipliziert mit dem Querreckgrad.

Während der Verstreckung richten sich die Moleküle des im Festkörperzustand befindlichen Folienschlauches derart aus, daß der Elastizitätsmodul und die Festigkeit in erheblichem Maß gesteigert werden.

Ausreichende Festigkeit der Schlauchfolie ist dann gegeben, wenn sich die Verpackungshülle beim Füllvorgang und während des Sterilisierens vernehmlich elastisch verformt. Die Verpackungshülle muß ihre zylindrische Form beibehalten und darf sich nicht ausbeulen oder krümmen.

Die biaxiale Verstreckung von Schlauchfolien aus teilkristallinen thermoplastischen Polymeren, wie z.B. Polyamid, Polyvinylidenchlorid erfordert eine rasche Abkühlung des schmelzeflüssigen Primärschlauches, da sonst die sich ausbildende kristalline Überstruktur die nachfolgende biaxiale Verstreckung behindert. Die Behinderung der biaxialen Verstreckung zeigt sich in der Praxis durch eine unruhige Reckblase, d.h. der Reckblasenhals wandert in wechselnder Richtung entlang der Schlauchachse, mit der Folge, daß der Schlauchdurchmesser des Endproduktes ungleichmäßig wird.

Für die Verarbeitung von teilkristallinem, aliphatischem Polyamid (PA) zu biaxial gereckten Folien und deren anschließende Verwendung als Brüh- und Kochwursthülle gibt die Patentliteratur zahlreiche Hinweise. Darin werden sowohl technische Lösungen für den Herstellungsprozeß der biaxial gereckten Schlauchfolien als auch Rezepturentwicklungen für verbesserte anwendungstechnische Eigenschaften veröffentlicht.

Die DE 2 850 181 weist darauf hin, daß durch das Einmischen von olefinischen Copolymeren in das PA eine verbesserte Reckbarkeit erreicht werden kann. Dies zeigt sich nach Angaben der Patentinhaberin darin, daß sich eine optisch eindeutig feststellbare Vergleichmäßigung der Reckblase einstellt und zum anderen eine erhebliche Herabsetzung der erforderlichen Reckkräfte beobachtet wird.

Durch das Einmischen von olefinischen (Co-)Polymeren oder anderen Polymeren, die eine geringere Wasserdampfpermeation als aliphatische Polyamide aufweisen, kann die Wasserdampfbarriere von Folien mit einer PA-Matrix deutlich verbessert werden; im Vergleich zu Hüllen aus PVDC-Copolymerisaten ist die Wasserdampfbarriere jedoch als unzureichend zu beurteilen und damit verbesserungswürdig. Bei der Verarbeitung von Polymerblends treten häufig Schwierigkeiten hinsichtlich einer konstanten Produktqualität auf, da die Verteilung der Blendkomponenten in der Matrix wesentlichen Einfluß auf die Verstreckfähigkeit und die Barriereeigenschaften hat. Aufgrund der Tatsache, daß die Qualität der Verteilung von sehr vielen Parametern der Verarbeitung abhängt (z.B. Viskositäten der Blendpartner, Verarbeitungstemperaturen, Verstreckraten, Schneckengeometrie, usw.), ist die Produktion einer reproduzierbaren Produktqualität äußerst schwierig.

Die mittels Anwendung der Blendtechnik erreichbare Verbesserung der Wasserdampfbarriere von einlagigen PA-Folienschläuchen resultiert aus der flächenförmigen Einlagerung der Blendkomponenten in der PA-Matrix. Die Größe der eingelagerten Flächen wird insbesondere durch den Grad der biaxialen Verstreckung der Folie beeinflußt.

Die flächigen Einlagerungen bilden allerdings keine geschlossene Folienschicht und können dementsprechend nicht in dem Maße die Wasserdampfpermeation reduzieren, wie dies bei Anwendung der Coextrusionstechnik möglich ist. Daraus resultiert, daß durch den Einsatz der Coextrusionstechnik bei gleichem Materialeinsatz eine deutlich verbesserte Wasserdampfbarriere erreicht wird. Das birgt ökonomische und ökologische Vorteile in sich.

Ähnliche Vorgehensweisen werden in den Dokumenten EP 0 216 094 und DE 3 801 344 beschrieben.

Durch die Beimischung von Ethylenvinylalkoholcopolymeren (EVOH) zum PA erreicht man gemäß EP 0 216 094 eine verbesserte Sauerstoffbarriere bei gleichzeitig hoher Durchlässigkeit von Rauch-Geschmacksträgern. Neben der bereits erwähnten Schwierigkeit, eine reproduzierbare Produktqualität herzustellen, führt die ungenügende Temperaturstabilität von EVOH während der Vermischung mit Polyamiden, die bei hoher Temperatur verarbeitet werden, zu einem unerwünschten Abbau des EVOH.

In der DE-OS 3 801 344 wird eine biaxial gereckte Schlauchfolie aus einem ternären Blend beschrieben. Während der Hauptgewichtsanteil der Folie aus aliphatischem PA besteht, werden weitere Anteile aus Polyterephthalsäureester und aromatischem PA zugemischt. Ziel dieser Blendstruktur ist nach Angaben des Anmelders eine homogene Farbpigmentverteilung in der Folie, die durch Farbmasterbatchzubereitung mit dem aromatischen PA und anschließender Zumischung erreicht werden kann.

Wie alle zuvor aufgeführten einschichtigen Folien auf der Basis von aliphatischen Polyamiden erfüllt auch diese Folienstruktur weder die Anforderungen der Produzenten nach sicherer Reproduzierbarkeit noch den Anforderungen der Verarbeiter nach hoher Barrierewirkung gegenüber Wasserdampf- und Sauerstoffpermeation.

Die seitens der Anwender geforderte Qualität der Schlauchfolie läßt sich unter ökonomischen und ökologischen Gesichtspunkten nur durch coextrudierte gereckte Schlauchfolien erfüllen.

In der japanischen Anmeldung J 1 014 032 wird eine biaxial gereckte coextrudierte Schlauchfolie für die Anwendung Brüh- und Kochwurstumhüllung aus 3 Schichten beschrieben, wobei die äußere dem Füllgut abgewandte Lage aus einem aliphatischen PA und die innere Lage aus einem Ethylen-Acrylsäure-Copolymeren besteht. Die zwischen der äußeren und inneren Lage angeordnete mittlere Schicht aus PP-bzw. PE-Copolymerem dient als Haftvermittler. Die innere Polymerschicht aus Ethylen-Acrylsäure-Copolymeren übernimmt hierbei die Funktion der Bräthaftung. Gemäß einer nachfolgenden Anmeldung, GB 2 205 273, wird die Bräthaftung der innenliegenden LLDPE-Schicht durch eine aufwendige, auf die Innenseite des Folienschlauches wirkende Korona-Vorbehandlung, verbessert.

Aufgabe der Erfindung war es dem Anwender eine ökologisch verträgliche, biaxial verstreckte Schlauchfolie mit verbesserter Barrierewirkung und verbesserten anwendungstechnischen Eigenschaften zur Verfügung zu stellen.

Gegenstand der Erfindung ist eine coextrudierte biaxial gereckte Schlauchfolie zur Umhüllung von in flüssigem oder pastösem Zustand abgepackten Füllgütern, insbesondere Lebensmitteln, die im befüllten Zustand aufgrund ihrer Barrierewirkung gegen Wasserdampf und Sauerstoff das Füllgut während einer längeren Lagerzeit dauerhaft faltenfrei und ohne sichtbare Sauerstoffeinwirkung umhüllt, deren innere, dem Füllgut zugekehrte Lage, Bräthaftung aufweist, dadurch gekennzeichnet, daß diese aus mindestens 3 Schichten besteht, die
- als äußere Schicht mindestens 1 Lage aus aliphatischem Polyamid
- als mittlere Schicht mindestens 1 Sauerstoff-sperrende Lage aus EVOH, (teil-)aromatischem Polyamid oder aliphatischem PA
- als innere Schicht mindestens eine Wasserdampf-sperrende Lage aus olefinischen (Co-)Polymeren mit Haftungseigenschaften zum Füllgut
umfassen.

Die hohe Barrierewirkung gegenüber Sauerstoff und Wasserdampf resultiert aus der Kombination der Barriereeigenschaften der einzelnen Polymerschichten, den Grenzflächen der einzelnen Schichten und der molekularen Überstruktur als Folge der Herstellungstechnik mit der biaxialen Verstreckung und der Thermofixierung und erfordert nicht die zusätzliche Einlagerung von chlorhaltigen Barriereschichten aus PVC oder PVDC.

In einer bevorzugten Ausführungsform werden als Amide Polyamid-6 oder Copolyamide mit einem überwiegenden Anteil an Caprolactam verwendet. Diese Polyamide können alleine oder als Polymermischung untereinander oder als Polymermischung mit anderen Polymeren, wie z.B. aromatischen Polyamiden, PE (-Copolymeren), PP (-Copolymeren), Polyester, usw., mit überwiegendem PA-Anteil verarbeitet werden.

Die Schicht aus aliphatischem PA ist in einer bevorzugten Ausführungsform als äußere Schicht (1) der Schlauchfolie angeordnet.

In einer besonders bevorzugten Ausführungsform beträgt die Schichtdicke außenliegender PA-Schicht 15 bis 35 µm.

Die innere Schicht (3) der erfindungsgemäßen Schlauchfolie besteht aus olefinischem Copolymer. Neben der Funktion der Bräthaftung kann diese Schicht einen Teil der Wasserdampfbarriere übernehmen. In einer besonders bevorzugten Ausführungsform besteht diese Schicht aus einem Ionomerharz, da mit diesem Polymertyp mit besonderer Sicherheit Geleeabsatz zwischen Hülle und verpacktem Fleisch verhindert werden kann. Desweiteren ermöglicht die innenliegende Schicht aus olefinischem Copolymer das Versiegeln der Schlauchfolienenden durch die höherschmelzenden Schichten hindurch. Diese Möglichkeit kann insbesondere dann Anwendung finden, wenn der Folienschlauch dem Verarbeiter als Abschnittware mit einseitig versiegelten Endstücken geliefert wird. Diese Schicht muß, wie alle anderen neben dem aliphatischen Polyamid vorliegenden Schichten, den Anforderungen des Folienherstellers hinsichtlich biaxialer Verstreckbarkeit derart genügen, daß sie sich bei den durch das PA vorgegebenen Parametern verarbeiten, insbesondere biaxial verstrecken, läßt.

Die mittlere, bzw. Kern-Schicht (2) der erfindungsgemäßen Schlauchfolie besteht aus EVOH-Copolymeren, (teil-)aromatischem PA oder aliphatischem PA. Diese Schicht hat insbesondere die Funktion der Sauerstoffbarriere.

Zwischen den Schichten (1)-(2) und (2)-(3) können Haftvermittlerschichten eingefügt werden. Die Haftvermittlerschichten weisen chemische und/oder physikalische Affinität zu den angrenzenden Schichten derart auf, daß ihre haftvermittelnde Wirkung auch nach dem Prozeß der biaxialen Verstreckung und der Kochprozedur erhalten bleibt. Für diese Funktion eignen sich im besonderen PE-und PP-Copolymere mit funktionellen Gruppen.

Die Haftvermittlerschichten übernehmen desweiteren die Funktion einer zusätzlichen Wasserdampfbarriere. Insbesondere bei der Anwendung von EVOH als Sauerstoff-Sperrschicht resultiert aus der Wasserdampf-abschirmenden beidseitigen Einkapselung eine Verbesserung der Sauerstoffbarriere bei hoher Luftfeuchtigkeit.

Sauerstoftpenetration bewirkt an der für den Verbraucher sichtbaren Oberfläche der Brüh- bzw. Kochwurst Brätvergrauung. Fortgeschrittene Brätvergrauung verleiht der Ware ein verkaufshemmendes Aussehen, was insbesondere dann zum Tragen kommt, wenn Waren unterschiedlichen Herstellungsdatums in der Ladentheke nahe beieinander liegen.

In der Praxis werden Schlauchhüllen vor der Verarbeitung mittels schnellaufender Füllautomaten gewässert. Ziel dieses Verfahrensschrittes ist neben der Oberflächenbenetzung der schlauchförmigen Hülle die Verbesserung der Flexibilität durch Wasseraufnahme. Auch Schlauchfolien aus thermoplastischen Materialien erfahren diese Behandlung, u.a. um wasseraufnahmefähige Polymere durch Wassereinlagerung "weich" zu machen. Bei Polyamiden kann infolge von Wasseraufnahme der Bereich der Glasübergangstemperatur auf unter 0°C gesenkt werden.

Bei der erfindungsgemäßen Schlauchfolie ist die Schicht aus aliphatischem PA als äußere Lage angeordnet, um eine ungestörte Wasseraufnahme während des Wässerungsprozesses zu gewährleisten.

### Beispiele

Die im nachfolgenden aufgeführten Beispiele wurden an einer 5-Schicht-Schlauchcoextrusionslinie realisiert. Die Plastifizierung und Homogenisierung der eingesetzten Polymere erfolgte mit Hilfe von 5 separaten Extrudern.

In den Fällen, bei denen der Folienverbund nur durch 4 Polymerschichten (mit wechselnder Funktion) gebildet wurde, sind 2 identische Polymertypen nebeneinandergelegt worden.

### Beispiel 1

Die Polymere (A) (B), (C), (D) werden durch 5 Extruder plastifiziert und homogenisiert und mittels einer 5-Schicht-Coextrusionsdüse in die Schlauchform überführt.
Der Folienschlauch besitzt von außen nach innen die Struktur: A1/B/C/B/D
- Polymer A1 ist ein Polyamid 6 (B40 F von der Bayer AG),
- Polymer B hat die Funktion eines Haftvermittlers (HV) und ist ein PE-Copolymer,
- Polymer C ist ein Ethylen-Vinylalkohol-Copolymer (EVAL EP F101 BZ von Kuraray),
- Polymer D ist ein Ionomer-Harz mit Zink- Ionomeren (Surlyn 1650 von DuPont).

Das aus der Düse austretende schlauchförmige Coextrudat wird sowohl von außen als auch von innen mit auf 10°C temperiertem Wasser abgeschreckt. Das Kühlwasser im Schlauchinneren wird durch ein dicht abschließendes Walzenpaar abgequetscht. Dieses Walzenpaar übernimmt gleichzeitig die Aufgabe des Schmelzeabzuges aus der Düse. Das vollständige Entfernen der Restfeuchte von der äußeren Oberfläche des Primärschlauches erfolgt mittels einer mechanischen Abstreifvorrichtung und eines Luftstrahls. Der so erhaltene unverstreckte

Primärschlauch hat einen Durchmesser von 20 mm und von außen nach innen folgende Schichtdickenverteilung:
A1 = 250 µm, B = 100 µm, C = 50 µm, B = 100 µm, D = 50 µm.

Nach seiner Wiedererwärmung auf 95°C wird der Primärschlauch durch Einschluß einer Luftblase zwischen zwei Walzenpaaren mit unterschiedlichen Umfangsgeschwindigkeiten um das 3,3fache quer und das 3,0fache längs gereckt.

Wiederum zwischen zwei gasdicht abschließenden Walzenpaaren durchläuft der biaxial gereckte Folienschlauch für 15 Sekunden eine auf 160°C temperierte Wärmebehandlungszone (Thermofixierung), wobei ein von innen wirkendes Gasdruckpolster weitestgehend den Schrumpf verhindert. Die so erhaltene biaxial gereckte, wärmebehandelte Schlauchfolie besitzt eine Gesamtschichtstärke von 58 µm.

Die Liegebreitenschwankung des flachgelegten Folienschlauches über einen beobachteten Zeitraum von 30 Minuten kleiner als 1,4 mm.

Während der anschließenden anwendungstechnischen Prüfung wird der Folienschlauch nach 10minütiger Lagerung in auf 20°C temperiertem Wasser mit Leberwurstbrät gefüllt, 45 Minuten bei 75°C gebrüht, mit kaltem Wasser abgeduscht und im Kühlhaus vollständig abgekühlt. Die Schlauchfolie umhüllt das Wurstbrät glatt und prall und weist gute Bräthaftungseigenschaften auf.

Die Gewichtsverluste durch Abdampfen von Wasser über einen Lagerungszeitraum von 20 Tagen betragen 0,2 Gew.-%; das Leberwurstbrät erfährt an seiner der Folie zugekehrten Seite keine sichtbare Brätvergrauung.

Die Folie läßt sich sehr gut wendelförmig vom Füllgut abschälen.

### Beispiel 2

Die Folienstruktur ist nahezu identisch zu Beispiel 1, mit dem Unterschied, daß zwischen der außenliegenden PA-Schicht und der EVOH-Schicht kein Haftvermittler eingesetzt wird. Daraus resultiert der Aufbau: A1/C/B/D/D.
Bei gleichem Verfahrensablauf wie in Beispiel 1 wird ein Primärschlauch mit folgender Schichtdickenverteilung erzeugt:
A1 = 250 µm, C = 50 µm, B = 100 µm, D = 50 µm, D = 100 µm.
Die biaxial gereckte, wärmebehandelte Schlauchfolie besitzt eine Gesamtschichtstärke von 58 µm.
Die Liegebreitenschwankung des flachgelegten Folienschlauches ist über einen beobachteten Zeitraum von 30 Minuten kleiner als 1,2 mm.

Bei der anschließenden anwendungstechnischen Prüfung erzielt diese Folienstruktur gleich gute Ergebnisse wie die aus Beispiel 1. Der Verbund zwischen der PA-und der EVOH-Schicht genügt auch ohne HV den Erfordernissen, die sich aus der biaxialen Verstreckung und dem anwendungstechnischen Procedere ergeben.

### Beispiel 3

In den Beispielen 3 und 4 wird anstelle der EVOH-Kernschicht eine Schicht aus (teil-)aromatischem Polyamid eingefügt.
Der Folienschlauch besitzt von außen nach innen die Struktur: A2/B/E/B/D.
- Polymer A2 ist ein Copolyamid 6.66 (Ultramid C35 von der BASF AG),
- Polymer B hat die Funktion eines Haftvermittlers (HV) und ist ein PE-Copolymer,
- Polymer E ist ein (teil-)aromatisches Polyamid (Nyref N-MXD6 von Solvay),
- Polymer D ist ein Ionomer-Harz mit Zink-Ionomeren.

Bei gleichem Verfahrensablauf wie in Beispiel 1 wird ein Primärschlauch mit folgender Schichtdickenverteilung erzeugt:
A2 = 250 µm, B = 100 µm, C = 50 µm, B = 100 µm, D = 50 µm.

Nach seiner Wiedererwärmung auf 95°C wird der Primärschlauch durch Einschluß einer Luftblase zwischen zwei Walzenpaaren mit unterschiedlichen Umfangsgeschwindigkeiten um das 3,4fache quer und das 3,1fache längs gereckt.

Wiederum zwischen zwei gasdicht abschließenden Walzenpaaren durchläuft der biaxial gereckte Folienschlauch für 15 Sekunden eine auf 160°C temperierte Wärmebehandlungszone (Thermofixierung), wobei ein von innen wirkendes Gasdruckpolster weitestgehend den Schrumpf verhindert. Die so erhaltene biaxial gereckte wärmebehandelte Schlauchfolie besitzt eine Gesamtschichtstärke von 54 µm.
Die Liegebreitenschwankung des flachgelegten Folienschlauches ist über einen beobachteten Zeitraum von 30 Minuten kleiner als 1,4 mm.

Bei der anschließenden vergleichenden anwendungstechnischen Prüfung erzielt diese Folienstruktur gleich gute Ergebnisse wie die aus den Beispielen 1 und 2.

### Beispiel 4

Die Folienstruktur ist nahezu identisch mit Beispiel 3, mit dem Unterschied, daß zwischen der außenliegenden PA-Schicht und der "Kernschicht" aus (teil-)aromatischem PA kein Haftvermittler eingesetzt wird. Daraus resultiert der Aufbau:
A2/E/B/D.

Der Primärschlauch weist folgende Schichtdickenverteilung auf:
A2 = 250 µm, E = 50 µm, B = 50 µm, D = 100 µm, D = 100 µm.

Der biaxial gereckte, wärmebehandelte Folienschlauch besitzt eine Gesamtschichtstärke von 55 µm.
Die Liegebreitenschwankung des flachgelegten Folienschlauches ist über einen beobachteten Zeitraum von 30 Minuten kleiner als 1,5 mm.

Bei der anschließenden vergleichenden anwendungstechnischen Prüfung werden gleich gute Ergebnisse wie bei den voranstehenden Beispielen erzielt. Der Verbund zwischen der äußeren Schicht aus aliphatischem PA und der "Kernschicht" aus (teil-)aromatischem PA genügt auch ohne HV den Erfordernissen, die sich aus der biaxialen Verstreckung und dem anwendungstechnischen Procedere ergeben.

## Patentansprüche

1. Coextrudierte, biaxial gereckte Schlauchfolie zur Umhüllung von in flüssigem oder pastösem Zustand abgepackten Füllgütern, insbesondere Lebensmitteln, die während und/oder nach der Abfüllung eine Wärmebehandlung erfahren, dadurch gekennzeichnet, daß diese aus mindestens 3 Schichten besteht, die
- als äußere Schicht mindestens 1 Lage aus aliphatischem Polyamid,
- als Kernschicht mindestens 1 Sauerstoff-sperrende Lage aus EVOH/oder (teil-)aromatischem und/oder aliphatischem Polyamid,
- als innere Schicht mindestens 1 Wasserdampf-sperrende Lage aus olefinischen (Co-)Polymeren mit Haftungseigenschaften zum Füllgut umfassen.

2. Schlauchfolie nach Anspruch 1, dadurch gekennzeichnet, daß deren außenliegende PA-Schicht aus aliphatischem Polyamid wie z. B. PA 6, PA 66, PA 11, PA 12, 66, PA 6.66, PA 6.8, 6.9, PA 6.10, PA 6.11, 6.12, einem Copolymer aus den darin enthaltenen Monomereinheiten oder einer Mischung der genannten aliphatischen Polyamide besteht.

3. Schlauchfolie nach den Ansprüchen 1 bis 2, dadurch gekennzeichnet, daß deren außenliegende PA-Schicht 70 bis 95 Gew.-% eines aliphatischen Polyamids und/oder Copolyamids und/oder Mischungen aus denselben und wenigstens ein
- (teil-)aromatisches PA und/oder
- olefinisches (Co-)Polymer (EVA, EVOH, Ionomerharz, säuremodifizierte Olefin-(CO-)Polymere) und/oder
- (CO-)Polyester
in Mengen von mindestens 5 bis höchstens 30 Gew.-%, bezogen auf das Gesamtgewicht des Polymergemisches, enthalten.

4. Schlauchfolie nach den Ansprüchen 1 bis 3, dadurch gekennzeichnet, daß die außenliegende PA-Schicht eine Schichtstärke von 10 bis 35 µm aufweist.

5. Schlauchfolie nach wenigstens einem der vorhergehenden Ansprüche, dadurch gekennzeichnet, daß die innenliegende, dem Füllgut zugekehrte Schicht, aus einem olefinischen Polymer, wie PE oder PP, einer Mischung derselben oder Copolymerem der darin enthaltenden Monomereinheiten, besteht.

6. Schlauchfolie nach wenigstens einem der vorangehenden Ansprüche, dadurch gekennzeichnet, daß die innenliegende, dem Füllgut zugekehrte Schicht, aus einem Ionomerpolymer besteht.

7. Schlauchfolie nach wenigstens einem der vorangehenden Ansprüche, dadurch gekennzeichnet, daß die das olefinische Polymer enthaltende Schicht eine Schichtstärke von 10 bis 30 µm aufweist.

8. Schlauchfolie nach wenigstens einem der vorhergehenden Ansprüche, dadurch gekennzeichnet, daß die Vinylalkohol-Einheiten des EVOH-Copolymeren einen Anteil von 40 bis 80 Mol-% einnehmen.

9. Schlauchfolie nach wenigstens einem der vorhergehenden Ansprüche, dadurch gekennzeichnet, daß das (teil-)aromatische PA durch Polykondensation von Meta-Xylylendiamin und Adipinsäure hergestellt wird.

10. Schlauchfolie nach wenigstens einem der vorangehenden Ansprüche, dadurch gekennzeichnet daß zwischen den Schichten unterschiedlicher stofflicher Zusammensetzung Haftvermittlerschichten eingefügt sind.

11. Schlauchfolie nach wenigstens einem der vorhergehenden Ansprüche, dadurch gekennzeichnet, daß die Summe aller Schichtendicken zwischen 35 und 80 µm liegt.

12. Schlauchfolie nach wenigstens einem der vorhergehenden Ansprüche, dadurch gekennzeichnet, daß diese eine scrap-Schicht, bestehend aus dem Gemisch aller extrudierten Einzelschichten aufweist.

13. Schlauchfolie nach wenigstens einem der vorhergehenden Ansprüche, dadurch gekennzeichnet, daß die innenliegende Schicht siegelfähig ist.

## Claims

1. Co-extruded, biaxially stretched tubular film for the wrapping of contents packed in the liquid or pasty state, in particular foodstuffs, which during and/or after filling undergo a heat treatment, characterised in that said tubular film consists of at least 3 layers, which comprise
- by way of outer layer at least 1 layer consisting of aliphatic polyamide,
- by way of core layer at least 1 oxygen-blocking layer consisting of EVOH or (partially) aromatic and/or aliphatic polyamide,
- by way of inner layer at least 1 water-vapour-blocking layer consisting of olefinic (co)polymers having adhesion properties with respect to the contents.

2. Tubular film according to Claim 1, characterised in that its outer PA layer consists of aliphatic polyamide such as PA 6, PA 66, PA 11, PA 12, 66, PA 6.66, PA 6.8, 6.9, PA 6.10, PA 6.11, 6.12, a copolymer formed from the monomer units contained therein or a mixture of the named aliphatic polyamides.

3. Tubular film according to Claims 1 to 2, characterised in that its outer PA layer contains 70 to 95 wt-% of an aliphatic polyamide and/or copolyamide and/or mixtures of the same and at least one
- (partially) aromatic PA and/or
- olefinic (co)polymer (EVA, EVOH, ionomer resin, acid-modified olefin (co)polymers) and/or
- (co)polyester
in quantities from at least 5 to at most 30 wt-%, relative to the total weight of the polymer mixture.

4. Tubular film according to Claims 1 to 3, characterised in that the outer PA layer has a layer thickness of 10 to 35 µm.

5. Tubular film according to at least one of the preceding claims, characterised in that the inner layer facing the contents consists of an olefinic polymer such as PE or PP, a mixture of the same or a copolymer of the monomer units contained therein.

6. Tubular film according to at least one of the preceding claims, characterised in that the inner layer facing the contents consists of an ionomeric polymer.

7. Tubular film according to at least one of the preceding claims, characterised in that the layer containing the olefinic polymer has a layer thickness of 10 to 30 µm.

8. Tubular film according to at least one of the preceding claims, characterised in that the vinyl-alcohol units of the EVOH copolymer take up a proportion amounting to between 40 and 80 mol-%.

9. Tubular film according to at least one of the preceding claims, characterised in that the (partially) aromatic PA is produced by polycondensation of meta-xylylene diamine and adipic acid.

10. Tubular film according to at least one of the preceding claims, characterised in that layers of an adhesion promoter are inserted between the layers of different material composition.

11. Tubular film according to at least one of the preceding claims, characterised in that the sum of all layer thicknesses amounts to between 35 and 80 µm.

12. Tubular film according to at least one of the preceding claims, characterised in that said tubular film has a scrap layer consisting of the mixture of all extruded individual layers.

13. Tubular film according to at least one of the preceding claims, characterised in that the inner layer is capable of being sealed.

## Revendications

1. Feuille en gaine coextrudée ayant subi un étirage biaxial pour l'emballage de matières de remplissage conditionnées à l'état liquide ou pâteux, en particulier des aliments, qui subissent un traitement thermique pendant et/ou après le transvasement, caractérisée en ce qu'elle est constituée par au moins trois couches qui comprennent
- comme couche externe, au moins une couche constituée de polyamide aliphatique,
- comme couche centrale, au moins une couche bloquant l'oxygène, constituée de EVOH ou d'un polyamide (partiellement) aromatique et/ou aliphatique,
- comme couche interne, au moins une couche bloquant la vapeur d'eau, constituée par des (co)polymères oléfiniques possédant des propriétés d'adhérence à la matière de remplissage.

2. Feuille en gaine selon la revendication 1, caractérisée en ce que sa couche externe en PA est constituée d'un polyamide aliphatique tel que par exemple PA 6, PA 66, PA 11, PA 12, PA 66, PA 6.66, PA 6.8, PA 6.9, PA 6.10, PA 6.11, PA 6.12, d'un copolymère obtenu à partir des unités monomères qui y sont contenues ou d'un mélange des polyamides aliphatiques mentionnés.

3. Feuille en gaine selon les revendications 1 à 2, caractérisée en ce que sa couche externe en PA contient de 70 à 95% en poids d'un polyamide et/ou d'un copolyamide aliphatique et/ou de mélanges de ces derniers et au moins
- un PA (partiellement) aromatique et/ou
- un (co)polymère oléfinique (EVA, EVOH, une résine ionomère, des (co)polymères oléfiniques modifiés par un acide) et/ou
- un (co)polyester
dans des quantités d'au moins 5 et allant jusqu'à au maximum 30% en poids, rapportés au poids total du mélange polymère.

4. Feuille en gaine selon les revendications 1 à 3, caractérisée en ce que la couche externe en PA présente une épaisseur de couche de 10 à 35 µm.

5. Feuille en gaine selon au moins une des revendications précédentes, caractérisée en ce que la couche interne tournée vers la matière de remplissage est constituée d'un polymère oléfinique tel que PE ou PP, d'un mélange de ces derniers ou encore de copolymères obtenus à partir des unités monomères qui y sont contenues.

6. Feuille en gaine selon au moins une des revendications précédentes, caractérisée en ce que la couche interne tournée vers la matière de remplissage est constituée d'un polymère ionomère.

7. Feuille en gaine selon au moins une des revendications précédentes, caractérisée en ce que la couche contenant le polymère oléfinique présente une épaisseur de couche de 10 à 30 µm.

8. Feuille en gaine selon au moins une des revendications précédentes, caractérisée en ce que les unités d'alcool vinylique du copolymère EVOH représentent une fraction de 40 à 80 moles %.

9. Feuille en gaine selon au moins une des revendications précédentes, caractérisée en ce que le PA (partiellement) aromatique est préparé par polycondensation de méta-xylylènediamine et d'acide adipique.

10. Feuille en gaine selon au moins une des revendications précédentes, caractérisée en ce qu'on insère entre les couches, des couches adhésives dont la composition matérielle est différente.

11. Feuille en gaine selon au moins une des revendications précédentes, caractérisée en ce que la somme de toutes les épaisseurs de couches se situe entre 35 et 80 µm.

12. Feuille en gaine selon au moins une des revendications précédentes, caractérisée en ce qu'elle présente une couche d'écaillage constituée du mélange de toutes les couches individuelles extrudées.

13. Feuille en gaine selon au moins une des revendications précédentes, caractérisée en ce que la couche interne peut être thermosoudée.
